(19) Europäisches Patentamt / European Patent Office / Office européen des brevets

(11) **EP 4 397 627 A1**

(12) **EUROPEAN PATENT APPLICATION**

(43) Date of publication:
**10.07.2024   Bulletin 2024/28**

(21) Application number: **23220233.3**

(22) Date of filing: **27.12.2023**

(51) International Patent Classification (IPC):
**C01G 53/00** (2006.01)     **H01M 4/505** (2010.01)

(52) Cooperative Patent Classification (CPC):
**C01G 53/006; C01G 53/50; H01M 4/505;
H01M 4/525; H01M 10/052;** C01P 2002/54;
C01P 2004/80

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **03.01.2023   KR 20230000869**

(71) Applicants:
• **SK Innovation Co., Ltd.**
  **Seoul 03188 (KR)**
• **SK On Co., Ltd.**
  **Seoul 03161 (KR)**
(72) Inventors:
• **PARK, Young Uk**
  **34124 Daejeon (KR)**
• **KANG, Min Gu**
  **34124 Daejeon (KR)**
• **KIM, Seung Hyun**
  **34124 Daejeon (KR)**
• **JEUN, Jeong Hoon**
  **34124 Daejeon (KR)**
• **CHOI, Jae Young**
  **34124 Daejeon (KR)**
• **CHOI, Je Nam**
  **34124 Daejeon (KR)**

(74) Representative: **Stolmár & Partner**
**Patentanwälte PartG mbB**
**Blumenstraße 17**
**80331 München (DE)**

(54) **CATHODE ACTIVE MATERIAL FOR LITHIUM SECONDARY BATTERY AND LITHIUM SECONDARY BATTERY INCLUDING THE SAME**

(57)    A cathode active material for a lithium secondary battery includes a lithium-transition metal oxide particle having a shape of a single particle and having a Mn oxidation number ratio of 0.23 or less. The Mn oxidation number ratio is calculated from a deconvolution of a Mn2p spectrum of the lithium-transition metal oxide particle by an X-ray photoelectron spectroscopy (XPS) analysis.

FIG. 1

EP 4 397 627 A1

**Description**

BACKGROUND

1. Field

The disclosure of this patent application relates to a cathode active material for a lithium secondary battery and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle, etc.

A lithium secondary battery among the secondary batteries is being actively developed due to high operational voltage and energy density per unit weight, a high charging rate, a compact dimension, etc.

The lithium secondary battery may include an electrode assembly including a cathode, an anode and a separator, and an electrolyte impregnating the electrode assembly. The lithium secondary battery may further include an exterior material in the form of, e.g., a pouch for accommodating the electrode assembly and the electrolyte.

A lithium-transition metal oxide may be used as a cathode active material for the lithium secondary battery. The lithium-transition metal oxide may include a nickel-based lithium metal oxide.

As an application range of the lithium secondary batteries is being expanded, developments of the lithium secondary battery having higher capacity and longer life-span are required.

However, a driving stability of the lithium secondary battery may be degraded due to a structural deformation of the lithium-transition metal oxide.

SUMMARY

According to an aspect of the present disclosure, there is provided a cathode active material for a lithium secondary battery having improved high-temperature stability and power property.

According to an aspect of the present disclosure, there is provided a lithium secondary battery having improved high-temperature stability and power property.

A cathode active material for a lithium secondary battery includes a lithium-transition metal oxide particle having a shape of a single particle and having a Mn oxidation number ratio of 0.23 or less defined by Equation 1

[Equation 1]

$$\text{Mn oxidation number ratio} = (A+B)/(A+B+C+D+E)$$

In Equation 1, A is an area of a peak in a region from 639 eV to 643 eV obtained by a deconvolution of a Mn2p spectrum of the lithium-transition metal oxide particle from an X-ray photoelectron spectroscopy (XPS) analysis, B is an area of a peak in a region from 651 eV to 655 eV obtained by the deconvolution of the Mn2p spectrum of the lithium-transition metal oxide particle from the XPS analysis, C is an area of a peak in a region from 639 eV to 647 eV obtained by the deconvolution of the Mn2p spectrum of the lithium-transition metal oxide particle from the XPS analysis, D is an area of a peak in a region from 651 eV to 658 eV obtained by the deconvolution of the Mn2p spectrum of the lithium-transition metal oxide particle from the XPS analysis, and E is an area of a peak in a region from 641 eV to 643 eV obtained by the deconvolution of the Mn2p spectrum of the lithium-transition metal oxide particle from the XPS analysis.

In some embodiments, A, B, C, D and E may be areas of different peaks obtained by the deconvolution of the Mn2p spectrum obtained by the XPS analysis.

In some embodiments, each of A and B may be an area of a peak representing $Mn^{3+}$ of the lithium-transition metal oxide particle obtained by the XPS analysis, and each of C, D and E may be an area of a peak representing $Mn^{4+}$ of the lithium-transition metal oxide particle obtained by the XPS analysis.

In some embodiments, the Mn oxidation number ratio may be in a range from 0.06 to 0.23.

In some embodiments, a ratio of the number of moles of cobalt relative to the total number of moles of a transition metal contained in the lithium-transition metal oxide particle may be 0.15 or less.

In some embodiments, the lithium-transition metal oxide particle may be represented by Chemical Formula 1.

[Chemical Formula 1]     $Li_aNi_xMn_{1-x-y}M_yO_{2+z}$

In Chemical Formula 1, $0.9<a<1.2$, $0.45\leq x\leq 0.85$, $0\leq y\leq 0.15$, $-0.1\leq z\leq 0.1$, and M includes at least one selected from the group consisting of Co, Al, Na, Ca, Nb, Ta, Mo, Zr, Ti, Cr, Cu, Zn, Sn, Ge, Ga, B, Mg, Ba, Si, Y, W, V and Sr.

In some embodiments, a cation mixing ratio of the lithium-transition metal oxide particle may be in a range from 2.4% to 7.5%. The cation mixing ratio is defined as a nickel occupancy of lithium sites in the lithium-transition metal oxide particle measured by an X-ray diffraction (XRD) analysis.

In some embodiments, a content of the lithium-transition metal oxide particle having the shape of the single particle relative to a total weight of the cathode active material for a lithium secondary battery may be in a range from 5 wt% to 100 wt%.

In some embodiments, the cathode active material may further include a metal coating formed on at least a portion of a surface of the lithium-transition metal oxide particle.

In some embodiments, the metal coating may include at least one selected from the group consisting of W, Mo, Cr, Nb, V, Ta and Co.

In some embodiments, a content of a metal element contained in the metal coating relative to a total weight of a transition metal contained in the lithium-transition metal oxide particle may be in a range from 500 ppm to 15000 ppm.

A lithium secondary battery includes a cathode including the cathode active material for a lithium secondary battery according to the above-described embodiments, and an anode facing the cathode.

According to embodiments of the present disclosure, a ratio of the number of moles of cobalt (Co) to the total number of moles of a transition metal contained in a lithium-transition metal oxide particle may be 0.15 or less. Within the above range, a content of cobalt of a high cost may be reduced, thereby reducing a production cost of a cathode active material.

The lithium-transition metal oxide particle has a shape of a single particle, and may have improved durability and crack resistance. Thus, side reactions between the cathode active material and an electrolyte solution may be suppressed so that a reduced capacity due to employing a low-cobalt cathode active material may be compensated.

In example embodiments, a Mn oxidation number ratio may be adjusted to a desirable range, so that $Mn^{4+}$ may be sufficiently formed on the surface of the lithium-transition metal oxide particle relatively to $Mn^{3+}$. Accordingly, side reactions between the cathode active material and the electrolyte solution may be suppressed and an amount of gas generation may be reduced.

In some embodiments, a cation mixing ratio of the lithium-transition metal oxide particle may be maintained in a desirable range, so that the amount of gas generation amount of the lithium secondary battery may be reduced and life-span properties may be improved while an initial efficiency and an initial capacity are also improved.

The cathode active material and the lithium secondary battery of the present disclosure may be widely applied in green technology fields such as an electric vehicle, a battery charging station, solar power generation wind power generation using other batteries, etc. The cathode active material for a lithium secondary battery and the lithium secondary battery according to the present disclosure may be used for eco-friendly electric vehicles and hybrid vehicles to prevent a climate change by suppressing air pollution and greenhouse gas emissions. etc.

BRIEF DESCRIPTION OF THE DRAWINGS

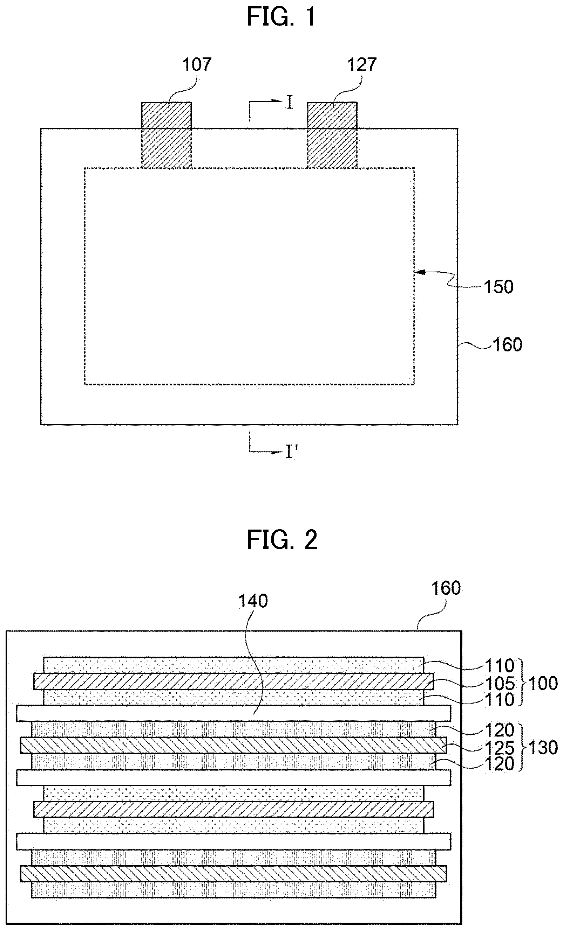

FIGS. 1 and 2 are a schematic plan view and a schematic cross-sectional view, respectively, illustrating a lithium secondary battery in accordance with exemplary embodiments.

DETAILED DESCRIPTION OF THE EMBODIMENTS

According to embodiments of the present disclosure, a cathode active material for a lithium secondary battery including a lithium-transition metal oxide particle is provided. According to embodiments of the present disclosure, a lithium secondary battery including the cathode active material is provided.

Hereinafter, example embodiments will be described in detail with reference to example embodiments and the accompanying drawings. However, those skilled in the art will appreciate that such embodiments and drawings are provided to further understand the spirit of the present invention and do not limit subject matters to be protected as disclosed in the detailed description and appended claims.

In example embodiments, a cathode active material for a lithium secondary battery (hereinafter, that may be abbreviated as a cathode active material) includes a lithium-transition metal oxide particle.

In example embodiments, the lithium-transition metal oxide particles may be provided as a compound capable of reversibly intercalating and de-intercalating lithium ions.

For example, the lithium-transition metal oxide particle may contain nickel (Ni) and manganese (Mn).

For example, a nickel-manganese precursor (e.g., a nickel-manganese hydroxide) or a nickel-cobalt-manganese precursor (e.g., a nickel-cobalt-manganese hydroxide) may be reacted with a lithium precursor by a dry-mixing or a wet-mixing, and then calcined to form the lithium-transition metal oxide particle

In some embodiments, a ratio of the number of moles of cobalt (Co) relative to the total number of moles of a transition metal contained in the lithium-transition metal oxide particle may be 0.15 or less. In some embodiments, the ration may be 0.12 or less. Within the above range, a content of cobalt of high cost may be reduced, thereby reducing a production cost of the cathode active material (e.g., a low-cobalt cathode active material).

In some embodiments, the lithium-transition metal oxide particle may include a layered structure or a crystal structure represented by Chemical Formula 1.

[Chemical Formula 1]     $Li_aNi_xMn_{1-x-y}M_yO_{2+z}$

In Chemical Formula 1, $0.9<a<1.2$, $0.45 \leq x \leq 0.85$, $0 \leq y \leq 0.15$, and $-0.1 \leq z \leq 0.1$. M may include at least one selected from the group consisting of Co, Al, Na, Ca, Nb, Ta, Mo, Zr, Ti, Cr, Cu, Zn, Sn, Ge, Ga, B, Mg, Ba, Si, Y, W, V and Sr.

According to embodiments of the present disclosure, the lithium-transition metal oxide particle has a shape of a single particle. Accordingly, durability of the lithium-transition metal oxide particle can be increased and cracks may be prevented. Thus, side reactions between the cathode active material and the electrolyte solution may be suppressed so that a reduced capacity due to the introduction of the low-cobalt cathode active material may be compensated

The term "single particle" used herein may exclude a secondary particle formed by agglomeration of a plurality of primary particles. For example, in a particle having the single particle form included in the lithium-transition metal oxide particles, a secondary particle structure formed by an assembly or an aggregation of the primary particles (e.g., more than 10, 20 or more, 30 or more, 40 or more, 50 or more, etc.) may be excluded.

In some embodiments, the lithium-transition metal oxide particle may include a structure in which a plurality of the primary particles are merged together and substantially converted into a single particle.

For example, the lithium-transition metal oxide particle may have a granular single particle shape or a spherical single particle shape.

In some embodiments, a content of a lithium-transition metal oxide particle in the form of the single particles may be in a range from 5 weight percent (wt%) to 100 wt% based on a total weight of the cathode active material. Within the above range, the life-span properties of the lithium secondary battery may be improved.

For example, the lithium-transition metal oxide particle having the above-described single particle shape may be formed by firing at a higher temperature than that for the formation of the secondary particle. Accordingly, a surface structure of the lithium-transition metal oxide particle may be damaged to increase the side reactions with the electrolyte solution and a gas generation.

According to embodiments of the present disclosure, the lithium-transition metal oxide particle has a Mn oxidation number ratio defined by Equation 1 below of 0.23 or less.

[Equation 1]

$$\text{Mn oxidation number ratio} = (A+B)/(A+B+C+D+E)$$

In Equation 1, A is an area of a peak in a region from 639 eV to 643 eV obtained by a deconvolution of a Mn2p spectrum of the lithium-transition metal oxide particle from an X-ray photoelectron spectroscopy (XPS) analysis. B is an area of a peak in a region from 651 eV to 655 eV obtained by the deconvolution of the Mn2p spectrum of the lithium-transition metal oxide particle from the XPS analysis. C is an area of a peak in a region from 639 eV to 647 eV obtained by the deconvolution of the Mn2p spectrum of the lithium-transition metal oxide particle from the XPS analysis. D is an area of a peak in a region from 651 eV to 658 eV obtained by the deconvolution of the Mn2p spectrum of the lithium-transition metal oxide particle from the XPS analysis. E is an area of a peak in a region from 641 eV to 643 eV obtained by the deconvolution of the Mn2p spectrum of the lithium-transition metal oxide particle from the XPS analysis.

For example, the deconvolution may represent an analysis method of fitting the Mn2p spectrum obtained through the XPS analysis into five peaks.

For example, A, B, C, D and E in Equation 1 may be areas of five different peaks obtained by the deconvolution of the Mn2p spectrum from the XPS analysis.

For example, A and B in Equation 1 may each be an area of the peak representing $Mn^{3+}$ of the lithium-transition metal oxide particle from the XPS analysis.

For example, C, D and E in Equation 1 may each be an area of the peak representing $Mn^{4+}$ of the lithium-

transition metal oxide particle from the XPS analysis.

For example, a sum of A and B may be a total area of the peaks representing $Mn^{3+}$ of the lithium-transition metal oxide particle.

For example, a sum of C, D and E may be a total area of the peaks representing $Mn^{4+}$ of the lithium-transition metal oxide particle.

For example, the Mn2p spectrum graph may be obtained by performing the XPS analysis on the surface of the lithium-transition metal oxide particle. The deconvolution of the obtained Mn2p spectrum graph may be performed to separate five peak regions representing $Mn^{3+}$ or $Mn^{4+}$.

For example, $Mn^{4+}$ may form a more stable structure than that of $Mn^{3+}$ to suppress the side reactions between the cathode active material and electrolyte solution.

In the above Mn oxidation number ratio range, $Mn^{4+}$ may be sufficiently formed on the surface of the lithium-transition metal oxide particle compared to $Mn^{3+}$, thereby suppressing the side reactions between the cathode active material and electrolyte solution and reducing the amount of gas generation.

For example, A, B, C, D and E in Equation 1 may be obtained by performing the XPS analysis on the surface of the lithium-transition metal oxide particle.

In some embodiments, the Mn oxidation number ratio may be in a range from 0.06 to 0.23. Within the above range, the Mn oxidation number ratio may be appropriately adjusted while maintaining the single particle form.

In an embodiment, the Mn oxidation number ratio of the lithium-transition metal oxide particle having the shape of the secondary particle may be 0.06.

The layered structure of the lithium-transition metal oxide particle may include a lithium site (Li site) and a transition metal site.

For example, a cation mixing phenomenon the transition metal such as nickel is substituted for the lithium site may occur. In this case, transfer of lithium ions may be hindered, and capacity and power properties of the cathode active material may be deteriorated.

In some embodiments, a cation mixing ratio of the lithium-transition metal particle may be in a range from 2.4% to 7.5%. Within the above range, the amount of gas generation in the lithium secondary battery may be reduced, and the life-span properties may be improved while enhancing initial efficiency and initial capacity.

For example, the cation mixing ratio may be defined as a nickel occupancy at the lithium site of the lithium-transition metal oxide particle which may be measured by an X-ray diffraction (XRD) analysis.

For example, a Rietveld refinement may be performed on data obtained through the XRD analysis to measure a Ni occupancy at the lithium site (Octahedral, 3b site). The cation mixing ratio may be obtained by multiplying the nickel occupancy by 100.

The Rietveld analysis may be performed using 98-016-9367 data from an Inorganic Crystal Structure Database (ICSD).

In some embodiments, a metal coating may be formed on at least a portion of the surface of the lithium-transition metal oxide particle. Accordingly, the crystal structure of a surface portion of the lithium-transition metal oxide particle may be modified, and the side reactions between the cathode active material and the electrolyte solution may be further suppressed.

For example, the metal coating may include at least one metal element selected from the group consisting of W, Mo, Cr, Nb, V, Ta and Co.

For example, a metal element included in the metal coating may have an oxidation number higher than $Mn^{4+}$ (e.g., $W^{6+}$, $Mo^{6+}$, $Cr^{6+}$, $Nb^{5+}$, $V^{5+}$ and/or $Ta^{5+}$). The metal coating of the metal element with a high oxidation number may be formed so that the Mn oxidation number ratio of the lithium-transition metal oxide particle may be adjusted to 0.23 or less, and the life-span properties of the lithium secondary battery may be improved.

In some embodiments, a content of the metal element contained in the metal coating contained in the lithium-transition metal oxide particle may be 500 ppm to 15,000 ppm relative to a total weight of the transition metal. Within the above range, reduction of the capacity and power properties of the cathode active material may be prevented while sufficiently forming the metal coating.

The total weight of the transition metal contained in the lithium-transition metal oxide particle and the weight of the metal element contained in the metal coating were each measured by an inductively coupled plasma-optical emission spectroscopy (ICP-OES).

For example, the metal coating may be formed by mixing and firing the lithium-transition metal oxide particle and a precursor of the metal element (e.g., an oxide or a hydroxide of the metal element).

FIGS. 1 and 2 are a schematic plan view and a schematic cross-sectional view, respectively, illustrating a lithium secondary battery in accordance with exemplary embodiments. For example, FIG. 2 is a cross-sectional view taken along a line I-I' of FIG. 1 in a thickness direction.

Referring to FIGS. 1 and 2, the lithium secondary battery may include a cathode 100 including the above-described lithium-transition metal oxide particle as the cathode active material and an anode 130 facing the cathode 100.

The cathode 100 may include a cathode active material layer 110 formed by coating the above-described cathode active material on a cathode current collector 105.

For example, the cathode active material may be mixed and stirred in a solvent together with a binder, a conductive material and/or a dispersive agent to form a cathode slurry. The cathode slurry may be coated on at least one surface of the cathode current collector 105, and then dried and pressed to form the cathode 100.

The cathode current collector 105 may include stainless steel, nickel, aluminum, titanium, or an alloy thereof. The cathode current collector 105 may include aluminum or stainless steel surface-treated with carbon, nickel, titanium or silver. For example, a thickness of the cathode current collector 105 may be in a range from 10 $\mu$m to 50 $\mu$m.

A non-aqueous solvent may be used as the solvent. For example, N-methyl-2-pyrrolidone (NMP), dimethylformamide, dimethylacetamide, N,N-dimethylaminopropylamine, ethylene oxide, tetrahydrofuran, etc. may be used as the solvent.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and/or power properties of the secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

The anode 130 may include an anode current collector 125 and an anode active material layer 120 formed by coating an anode active material on at least one surface of the anode current collector 125.

The anode active material may include a material capable of adsorbing and ejecting lithium ions. For example, a carbon-based material such as a crystalline carbon, an amorphous carbon, a carbon composite or a carbon fiber, a lithium alloy, silicon or tin may be used as the anode active material.

The amorphous carbon may include, e.g., a hard carbon, coke, a mesocarbon microbead (MCMB) fired at a temperature of 1500 °C or less, a mesophase pitch-based carbon fiber (MPCF), etc. The crystalline carbon may include a graphite-based material such as natural graphite, graphitized coke, graphitized MCMB, graphitized MPCF, etc. The lithium alloy may further include aluminum, zinc, bismuth, cadmium, antimony, silicon, lead, tin, gallium, indium, etc.

For example, the anode current collector 125 may include a copper foil, a nickel foil, a stainless steel foil, a titanium foil, a nickel foam, a copper foam or a polymer substrate coated with a conductive metal. These may be used alone or in combination thereof. For example, a thickness of the anode current collector 125 may be in a range from 10 $\mu$m to 50 $\mu$m.

In some embodiments, a slurry may be prepared by mixing and stirring the anode active material with a binder, a conductive material, and/or a dispersive agent in a solvent. The slurry may be coated on at least one surface of the anode current collector, and then dried and pressed to form the anode 130.

The binder and the conductive material substantially the same as or similar to those used for the cathode may be used in the anode 130. In some embodiments, the binder for forming the anode 130 may include an aqueous binder such as styrene-butadiene rubber (SBR) for a compatibility with, e.g., the carbon-based active material, and carboxymethyl cellulose (CMC) may also be used as a thickener.

In some embodiments, a separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, etc. The separation layer 140 may also include a nonwoven fabric formed from a glass fiber with a high melting point, a polyethylene terephthalate fiber, or the like.

In example embodiments, an electrode cell may be defined by the cathode 100, the anode 130 and the separation layer 140, and a plurality of the electrode cells may be stacked to form an electrode assembly 150 that may have e.g., a jelly roll shape. For example, the electrode assembly 150 may be formed by stacking, z-folding, stack-folding of the separation layer 140.

For example, the electrode assembly 150 may be accommodated together with an electrolyte in a case 160 to define the lithium secondary battery. In example embodiments, a non-aqueous electrolyte may be used as the electrolyte.

The non-aqueous electrolyte may include a lithium salt and an organic solvent. The lithium salt may be represented by $Li^+X^-$, and an anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

For example, the organic solvent may include propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, gamma-butyrolactone, propylene, etc. These may be used alone or in a combination of two or more therefrom.

The non-aqueous electrolyte solution may further include an additive. The additive may include, e.g., a cyclic carbonate-based compound, a fluorine-substituted carbonate-based compound, a sultone-based compound, a cyclic sulfate-based compound, a cyclic sulfite-based compound, a phosphate-based compound, a borate-based compound, etc. These may be used alone or in a combination of two or more therefrom.

The cyclic carbonate-based compound may include vinylene carbonate (VC), vinyl ethylene carbonate (VEC), etc.

The fluorine-substituted cyclic carbonate-based compound may include fluoroethylene carbonate (FEC).

The sultone-based compound may include 1,3-propane sultone, 1,3-propene sultone, 1,4-butane sultone, etc.

The cyclic sulfate-based compound may include 1,2-ethylene sulfate, 1,2-propylene sulfate, etc.

The cyclic sulfite-based compound may include ethylene sulfite, butylene sulfite, etc.

The phosphate-based compound may include lithium difluoro bis-oxalato phosphate, lithium difluoro phosphate, etc.

The borate-based compound may include lithium bis(oxalate) borate.

In some embodiments, a solid electrolyte may be used instead of the non-aqueous electrolyte solution described above. In this case, the lithium secondary battery may be fabricated in the form of an all-solid-state battery. Additionally, a solid electrolyte layer may be disposed between the cathode 100 and the anode 130 instead of the above-described separation layer 140.

The solid electrolyte may include a sulfide-based electrolyte. Non-limiting examples of the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, and Z is Ge, Zn or Ga), $Li_2S-GeS_2$, $Li_2S-SiS_2-Li_3PO_4$, $Li_2S-SiS_2-Li_pMO_q$, (p and q are positive numbers, M is P, Si, Ge, B, Al, Ga or In), $Li_7-xPS_6-xCl_x$ ($0 \leq x \leq 2$), $Li_7-xPS_6-xBr_x$ ($0 \leq x \leq 2$), $Li_7-xPS_6-xI_x$ ($0 \leq x \leq 2$), etc. These may be used alone or in a combination thereof.

In an embodiment, the solid electrolyte may include, e.g., an oxide-based amorphous solid electrolyte such as $Li_2O-B_2O_3-P_2O_5$, $Li_2O-SiO_2$, $Li_2O-B_2O_3$, $Li_2O-B_2O_3-ZnO$, etc.

As illustrated in FIG. 1, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a square shape, a pouch shape or a coin shape.

Hereinafter, embodiments of the present disclosure are described in more detail with reference to experimental examples.

Example 1

(1) Preparation of cathode active material

$NiSO_4$, $CoSO_4$ and $MnSO_4$ were mixed in a molar ratio of 0.56:0.12:0.32, respectively, using distilled water bubbled with $N_2$ for 24 hours to remove internal dissolved oxygen. The solution was added to a reactor at 55°C, and a coprecipitation reaction proceeded for 36 hours using NaOH and $NH_3H_2O$ as a precipitant and a chelating agent, respectively, to obtain $Ni_{0.56}Co_{0.12}Mn_{0.32}(OH)_2$ as a transition metal precursor. The obtained precursor was dried at 80°C for 12 hours and then re-dried at 110°C for 12 hours.

Lithium hydroxide and the transition metal precursor were added to a dry highspeed mixer in a molar ratio of 1.05:1 and mixed uniformly for 5 minutes. The mixture was placed in a firing furnace, heated to 1000°C at a ramping rate of 2°C/min, and maintained at 1000°C for 10 hours. Oxygen was passed continuously at a flow rate of 10 mL/min during increasing and maintaining the temperature. After the firing, natural cooling was performed to room temperature, and then pulverized and classified to produce lithium-transition metal oxide particles each having the shape of a single particle and a composition of $LiNi_{0.56}Co_{0.12}Mn_{0.32}O_2$.

The prepared mixture of lithium-transition metal oxide particles, $Al(OH)_3$ and $WO_3$ were placed in a firing furnace, heated to 500°C at a ramping rate of 2°C/min, and heat-treated at 500°C for 5 hours to form a metal coating on at least a portion of a surface of the lithium-transition metal oxide particle.

$WO_3$ was added so that a weight of W measured through an ICP-OES was 3000 ppm relative to a total weight of nickel, cobalt and manganese contained in the lithium-transition metal particles measured through the ICP-OES.

(2) Fabrication of lithium secondary battery

A lithium secondary battery was manufactured using the prepared lithium-transition metal oxide particles including the metal coating formed thereon as a cathode active material.

Specifically, a cathode slurry was prepared by mixing the cathode active material, Denka Black as a conductive material and PVDF as a binder in a mass ratio of 93:5:2, respectively. The cathode slurry was coated on an aluminum current collector (thickness: 15 µm), vacuum dried at 130°C, and then pressed to prepare a cathode.

An anode slurry containing 93 wt% of natural graphite as an anode active material, 5 wt% of KS6 as a flake type conductive material, 1 wt% of styrene-butadiene rubber (SBR) as a binder and 1 wt% of carboxymethyl cellulose (CMC) as a thickener was prepared. The cathode slurry was coated, dried and pressed on a copper substrate to prepare an anode.

The cathode and the anode manufactured as described above were notched to a predetermined size, and an electrode cell was formed by interposing a separator (polyethylene, thickness 15 µm) between the anode and the cathode. Each tab portion of the cathode and the anode was welded. The welded cathode/separator/anode assembly was placed in a pouch and three sides except for an electrolyte injection side were sealed. The electrode tab portions were also included in the sealing portion. An electrolyte was injected through the electrolyte injection side, and the electrolyte injection side was also sealed and impregnation for more than 12 hours was performed.

In the preparation of the electrolyte, a 1M LiPF6 solution was prepared using a mixed solvent of EC/EMC (30/70; volume ratio), and then 1 wt% of vinylene carbonate (VC), 0.5 wt% of 1,3-propenesultone (PRS), and 0.5 wt% of lithium bis(oxalato)borate (LiBOB) was added.

Example 2

A cathode active material and a lithium secondary battery were manufactured by the same method as that in Example 1, except that $NiSO_4$ and $MnSO_4$ were mixed in a molar ratio of 0.75:0.25, respectively, to form lithium-transition metal oxide particles having a single particle shape and a composition of $LiNi_{0.75}Mn_{0.25}O_2$, the firing temperature was maintained as 930 °C instead of 1000 °C and $Co_3O_4$ was further added when forming the metal coating.

Example 3

A cathode active material and a lithium secondary battery were manufactured by the same method as that in Example 1, except that $NiSO_4$, $CoSO_4$ and $MnSO_4$ were mixed in a molar ratio of 0.56:0.30:0.14, respectively, to form lithium-transition metal oxide particles having a single particle shape and a composition of $LiNi_{0.56}Co_{0.30}Mn_{0.14}O_2$.

Example 4

A cathode active material and a lithium secondary battery were manufactured by the same method as that in Example 1, except that $NiSO_4$, $CoSO_4$ and $MnSO_4$ were mixed in a molar ratio of 0.56:0.01:0.43, respectively, to form lithium-transition metal oxide particles having a single particle shape and a composition of $LiNi_{0.56}Co_{0.01}Mn_{0.43}O_2$.

Comparative Example 1

$NiSO_4$, $CoSO_4$ and $MnSO_4$ were mixed in a molar ratio of 0.50:0.20:0.30, respectively, using distilled water bubbled with $N_2$ for 24 hours to remove internal dissolved oxygen. The solution was added to a reactor at 55°C, and a co-precipitation reaction proceeded for 36 hours using NaOH and $NH_3H_2O$ as a precipitant and a chelating agent, respectively, to obtain $Ni_{0.50}Co_{0.20}Mn_{0.30}(OH)_2$ as a transition metal precursor. The obtained precursor was dried at 80°C for 12 hours and then re-dried at 110°C for 12 hours.

Lithium hydroxide and the transition metal precursor were added to a dry highspeed mixer in a molar ratio of 1.05:1 and mixed uniformly for 5 minutes. The mixture was placed in a firing furnace, heated to 900°C at a ramping rate of 2°C/min, and maintained at 900°C for 10 hours. Oxygen was passed continuously at a flow rate of 10 mL/min during increasing and maintaining the temperature. After the firing, natural cooling was performed to room temperature, and then pulverized and classified to produce lithium-transition metal oxide particles each having a shape of a secondary particle and a composition of $LiNi_{0.50}Co_{0.20}Mn_{0.30}O_2$.

The prepared mixture of lithium-transition metal oxide particles and $Al(OH)_3$ were placed in a firing furnace, heated to 500°C at a ramping rate of 2°C/min, and heat-treated at 500°C for 5 hours to form a metal coating on at least a portion of a surface of the lithium-transition metal oxide particle.

A lithium secondary battery was manufactured by the same method as that in Example 1 using the prepared lithium-transition metal oxide particles having the metal coating thereon as a cathode active material.

Comparative Example 2

A cathode active material and a lithium secondary battery were manufactured by the same method as that in Comparative Example 1, except that the firing temperature of the mixture of lithium hydroxide and the transition metal precursor was adjusted to 1000 ° C to prepare lithium-transition metal oxide particles having a single particle shape.

Experiment Example

(1) XPS analysis - Measurement of Mn oxidation number ratio

A sample of the cathode active material prepared according to each of Examples and Comparative Examples was prepared to be attaching to a carbon tape, and an XPS analysis was performed under the following conditions to obtain a Mn2p spectrum of a surface portion of the lithium-transition metal oxide particle.

[XPS analysis conditions]

i) X-ray type: Al k alpha, 1486.68 eV, 900 $\mu$m Beam size
ii) Analyzer: CAE (constant analyzer energy) Mode
iii) Number of scans: 50
iv) Pass energy: 20 eV
v) Dwell Time: 100 ms

A deconvolution of the obtained Mn2p spectrum was performed such that the spectrum was fitted into five different peaks.

The five different peaks were peaks in a region from 639 eV to 643 eV, a region from 651 eV to 655 eV, a region from 639 eV to 647 eV, a region from 651 eV to 658 eV and a region from 641 eV to 643 eV.

An area of the peak in the region from 639 eV to 643 eV region (A), an area of the peak in the region from 651 eV to 655 eV region, an area of the peak in the region from 639 eV to 647 eV (C), an area of the peak in the region from 651 eV to 658 eV (D) and an area of the peak in the region from 641 eV to 643 eV (E) were measured.

The measured area of each peak was substituted into Equation 1 above to calculate the Mn oxidation number ratio of the lithium-transition metal oxide particle.

(2) XRD analysis - Measurement of cation mixing ratio

A sample of the cathode active material according to each of Examples and Comparative Examples was obtained. A Ni occupancy of lithium sites (octahedral, 3b site) was obtained through a Rietveld analysis using an XRD analysis data. The nickel occupancy was multiplied by 100 to obtain a cation mixing ratio.

The Rietveld analysis was performed using 98-016-9367 data from Inorganic Crystal Structure Database (ICSD).

Specific XRD analysis equipment/conditions are as shown in Table 1 below.

[Table 1]

| XRD(X-Ray Diffractometer) EMPYREAN | |
|---|---|
| Maker | PANalytical |
| Anode material | Cu |
| K-Alphal wavelength | 1.540598 Å |
| Generator voltage | 45 kV |
| Tube current | 40 mA |

(continued)

| XRD(X-Ray Diffractometer) EMPYREAN | |
|---|---|
| Maker | PANalytical |
| Scan Range | 10~120° |
| Scan Step Size | 0.0065° |
| Divergence slit | 1/4° |
| Antiscatter slit | 1/2° |

(3) Evaluation on initial efficiency

After a formation charge and discharge of the lithium secondary battery according to each of Examples and Comparative Examples, charging (CC-CV 0.1C 4.3V 0.05C CUT-OFF) and discharging (CC 0.1C 3.0V CUT-OFF)) were performed at room temperature (25°C) was performed once to measure an initial charge capacity and an initial discharge capacity.

An initial efficiency was evaluated as a percentage calculated by dividing the measured initial discharge capacity by the measured initial charge capacity.

(4) Evaluation on high temperature storage properties: Measurement of gas generation (60 °C)

The lithium secondary battery according to each of Examples and Comparative Examples was left in a chamber at 60 °C for 8 weeks, left at room temperature for 30 minutes, and then placed in a chamber to measure an amount of gas generation.

After forming a vacuum in the chamber, nitrogen gas was filled to form a normal pressure, and then a nitrogen volume ($V_0$) and a chamber internal pressure ($P_0$) were measured. After forming a vacuum again at an inside the chamber, a hole was drilled in the battery, and an internal pressure ($P_1$) of the chamber was measured 1 hour later. An amount of gas generation was calculated by substituting the measurement results into the equation below.

$$\text{Amount of gas generation (mL)} = (V_0/P_0)*P_1$$

The composition, the particle shape, the coating metal, the Mn oxidation number ratio and cation mixing ratio of the cathode active material according to each of Examples and Comparative Examples are shown in Table 2 below. The initial efficiency and the amount of gas generation of lithium secondary batteries according to Examples and Comparative Examples are shown in Table 3 below.

[Table 2]

| No. | cathode active material | | | Mn oxidation number ratio | cation mixing ratio (%) |
|---|---|---|---|---|---|
| | composition | particle shape | coating metal | | |
| Example 1 | $LiNi_{0.56}Co_{0.12}Mn_{0.32}O_2$ | single particle | Al, W | 0.19 | 4.03 |
| Example 2 | $LiNi_{0.75}Mn_{0.25}O_2$ | single particle | Al, W, Co | 0.21 | 5.00 |
| Example 3 | $LiNi_{0.56}Co_{0.30}Mn_{0.14}O_2$ | single particle | Al, W | 0.15 | 2.38 |
| Example 4 | $LiNi_{0.56}Co_{0.01}Mn_{0.43}O_2$ | single particle | Al, W | 0.18 | 7.54 |
| Comparative Example 1 | $LiNi_{0.50}Co_{0.20}Mn_{0.30}O_2$ | secondary particle | Al | 0.06 | 2.33 |
| Comparative Example 2 | $LiNi_{0.50}Co_{0.20}Mn_{0.30}O_2$ | single particle | Al | 0.25 | 3.10 |

[Table 3]

| No. | initial efficiency (%) | amount of gas generation (mL) (60 °C, 8 weeks) |
|---|---|---|
| Example 1 | 88.7 | 22.1 |
| Example 2 | 89.2 | 26.7 |
| Example 3 | 89.4 | 30.9 |
| Example 4 | 87.5 | 20.5 |
| Comparative Example 1 | 90.2 | 45.2 |
| Comparative Example 2 | 89.1 | 32.4 |

Referring to Tables 2 and 3, in Examples where the Mn oxidation number ratio defined by Equation 1 was 0.23 or less, the initial efficiency was generally improved and the amount of gas generation during high temperature storage was reduced compared to those from Comparative Examples.

In Example 3 where the cation mixing ratio was less than 2.4%, the initial efficiency was improved, but the amount of gas generation was increased relatively to those from other Examples.

In Example 4 where the cation mixing ratio exceeded 7.5%, the amount of gas generation was reduced, but the initial efficiency was lowered relatively to those from other Examples.

In Comparative Example 1 where the cathode active material in the form of the secondary particle, the amount of gas generation was explicitly increased.

In Comparative Example 2 where the cathode active material in the form of the single particle was used but the Mn oxidation number ratio exceeded 0.23, a surface structure of the lithium-transition metal oxide particle was unstable. The surface structure of the lithium-transition metal oxide particle of Comparative Example 2 was transformed by the high-temperature firing for the formation of the single particle to cause the increased amount of gas generation due to side reactions with the electrolyte solution.

## Claims

1. A cathode active material for a lithium secondary battery comprising a lithium-transition metal oxide particle having a shape of a single particle and having a Mn oxidation number ratio of 0.23 or less defined by Equation 1:

[Equation 1]

$$\text{Mn oxidation number ratio} = (A+B)/(A+B+C+D+E)$$

wherein, in Equation 1, A is an area of a peak in a region from 639 eV to 643 eV obtained by a deconvolution of a Mn2p spectrum of the lithium-transition metal oxide particle from an X-ray photoelectron spectroscopy (XPS) analysis, B is an area of a peak in a region from 651 eV to 655 eV obtained by the deconvolution of the Mn2p spectrum of the lithium-transition metal oxide particle from the XPS analysis, C is an area of a peak in a region from 639 eV to 647 eV obtained by the deconvolution of the Mn2p spectrum of the lithium-transition metal oxide particle from the XPS analysis, D is an area of a peak in a region from 651 eV to 658 eV obtained by the deconvolution of the Mn2p spectrum of the lithium-transition metal oxide particle from the XPS analysis, and E is an area of a peak in a region from 641 eV to 643 eV obtained by the deconvolution of the Mn2p spectrum of the lithium-transition metal oxide particle from the XPS analysis.

2. The cathode active material for a lithium secondary battery according to claim 1, wherein A, B, C, D and E are areas of different peaks obtained by the deconvolution of the Mn2p spectrum obtained by the XPS analysis.

3. The cathode active material for a lithium secondary battery according to claim 2, wherein each of A and B is an area of a peak representing $Mn^{3+}$ of the lithium-transition metal oxide particle obtained by the XPS analysis, and each of C, D and E is an area of a peak representing $Mn^{4+}$ of the lithium-transition metal oxide particle obtained by the XPS analysis.

4. The cathode active material for a lithium secondary battery according to any one of claims 1 to 3, wherein the Mn oxidation number ratio is in a range from 0.06 to 0.23.

5. The cathode active material for a lithium secondary battery according to any one of claims 1 to 4, wherein a ratio of the number of moles of cobalt relative to the total number of moles of a transition metal contained in the lithium-transition metal oxide particle is 0.15 or less.

6. The cathode active material for a lithium secondary battery according to any one of claims 1 to 5, wherein the lithium-transition metal oxide particle is represented by Chemical Formula 1:

   [Chemical Formula 1]     $Li_aNi_xMn_{1-x-y}M_yO_{2+z}$

   wherein, in Chemical Formula 1, $0.9 \leq a \leq 1.2$, $0.45 \leq x \leq 0.85$, $0 \leq y \leq 0.15$, $-0.1 \leq z \leq 0.1$, and M includes at least one selected from the group consisting of Co, Al, Na, Ca, Nb, Ta, Mo, Zr, Ti, Cr, Cu, Zn, Sn, Ge, Ga, B, Mg, Ba, Si, Y, W, V and Sr.

7. The cathode active material for a lithium secondary battery according to any one of claims 1 to 6, wherein a cation mixing ratio of the lithium-transition metal oxide particle is in a range from 2.4% to 7.5%, and
   the cation mixing ratio is defined as a nickel occupancy of lithium sites in the lithium-transition metal oxide particle measured by an X-ray diffraction (XRD) analysis.

8. The cathode active material for a lithium secondary battery according to any one of claims 1 to 7, wherein a content of the lithium-transition metal oxide particle having the shape of the single particle relative to a total weight of the cathode active material for a lithium secondary battery is in a range from 5 wt% to 100 wt%.

9. The cathode active material for a lithium secondary battery according to any one of claims 1 to 8, further comprising a metal coating formed on at least a portion of a surface of the lithium-transition metal oxide particle.

10. The cathode active material for a lithium secondary battery according to claim 9, wherein the metal coating includes at least one selected from the group consisting of W, Mo, Cr, Nb, V, Ta and Co.

11. The cathode active material for a lithium secondary battery according to claim 9 or claim 10, wherein a content of a metal element contained in the metal coating relative to a total weight of a transition metal contained in the lithium-transition metal oxide particle is in a range from 500 ppm to 15000 ppm.

12. A lithium secondary battery, comprising:

    a cathode comprising the cathode active material for a lithium secondary battery of any one of claims 1 to 11; and
    an anode facing the cathode.

# FIG. 1

107          127

I

150

160

I'

# FIG. 2

140          160

110
105  } 100
110

120
125  } 130
120

Europäisches
Patentamt

European
Patent Office

Office européen
des brevets

# EUROPEAN SEARCH REPORT

**Application Number**

EP 23 22 0233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/350581 A1 (KIM JEOM-SOO [KR] ET AL) 5 November 2020 (2020-11-05) * paragraphs [0024], [0197]; claims; examples; tables * | 1-12 | INV. C01G53/00 H01M4/505 |
| X | EP 4 067 311 A1 (SK ON CO LTD [KR]) 5 October 2022 (2022-10-05) * paragraph [0174]; claims; example 6 * | 1-4,6-12 | |
| X | EP 3 647 270 A1 (SAMSUNG SDI CO LTD [KR]) 6 May 2020 (2020-05-06) * claims; examples 1,2 * | 1-4,6-8, 12 | |
| A | R. GRISSA: "Thorough XPS analyses on overlithiated manganese spinel cycled around the 3V plateau", APPLIED SURFACE SCIENCE, vol. 411, 1 July 2017 (2017-07-01), pages 449-456, XP093162893, Amsterdam , NL ISSN: 0169-4332, DOI: 10.1016/j.apsusc.2017.03.205 * the whole document * | 1-12 | |

| TECHNICAL FIELDS SEARCHED (IPC) |
|---|
| C01G H01M |

The present search report has been drawn up for all claims

| Place of search | Date of completion of the search | Examiner |
|---|---|---|
| Munich | 17 May 2024 | Nobis, Barbara |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 22 0233

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2024

| Patent document cited in search report | | Publication date | Patent family member(s) | | Publication date |
|---|---|---|---|---|---|
| US 2020350581 | A1 | 05-11-2020 | KR | 20200127910 A | 11-11-2020 |
| | | | US | 2020350581 A1 | 05-11-2020 |
| EP 4067311 | A1 | 05-10-2022 | CN | 115207298 A | 18-10-2022 |
| | | | EP | 4067311 A1 | 05-10-2022 |
| | | | KR | 20220136718 A | 11-10-2022 |
| | | | US | 2022320575 A1 | 06-10-2022 |
| EP 3647270 | A1 | 06-05-2020 | CN | 111146437 A | 12-05-2020 |
| | | | EP | 3647270 A1 | 06-05-2020 |
| | | | HU | E063454 T2 | 28-01-2024 |
| | | | JP | 7022730 B2 | 18-02-2022 |
| | | | JP | 2020072091 A | 07-05-2020 |
| | | | KR | 20200050747 A | 12-05-2020 |
| | | | PL | 3647270 T3 | 03-01-2024 |
| | | | US | 2020144602 A1 | 07-05-2020 |

EPO FORM P0459

For more details about this annex : see Official Journal of the European Patent Office, No. 12/82